# EUROPEAN PATENT APPLICATION

(11) **EP 4 529 198 A1**
(43) Date of publication of application: **26.03.2025**
(21) Application number: 23838787.2
(22) Date of filing: 30.06.2023
(51) Int. Cl.: H04N 21/81, H04N 21/234, H04N 21/44, H04N 21/218

(54) **VIDEO TRANSMISSION METHOD, APPARATUS, AND SYSTEM, DEVICE, AND MEDIUM**

(30) Priority: 14.07.2022 CN 202210834750
(71) Applicant: DOUYIN VISION CO., LTD., Beijing 100041 (CN)
(72) Inventor: XU, Bin, Beijing 100028 (CN); SHI, Shu, Beijing 100028 (CN); GUI, Yongqiang, Beijing 100028 (CN); ZHENG, Gaoting, Beijing 100028 (CN)
(74) Representative: Williams, Michael David
(86) International application number: PCT/CN2023/105336
(87) International publication number: WO 2024/012295

(57) **Abstract**

Embodiments of the present disclosure relate to a video transmission method, apparatus and system, a device and a medium. The method is executed by a mobile edge computing node. The method includes: receiving a panoramic video stream collected in real time; receiving pose information of a terminal device; generating a video stream for the terminal device based on the pose information and the panoramic video stream, wherein the video stream includes a part of the panoramic video stream corresponding to the pose information; and transmitting the video stream to the terminal device. According to the embodiments of the present disclosure, the end-to-end delay and downlink data volume for the terminal device during live streaming of high-definition panoramic videos a can be reduced, and the viewing experience of a user is improved.

## Description

### CROSS-REFERENCE TO RELATED APPLICATION(S)

This application claims priority to Chinese Application No. 202210834750.3, filed on July 14, 2022, and entitled " Video Transmission Method, Apparatus and System, Device and Medium", the disclosure of which is incorporated herein by reference in its entirety.

### FIELD

Embodiments of the present disclosure relate to the technical field of communications, and more specifically to a video transmission method, apparatus and system, a computing device, a computer-readable storage medium and a computer program product.

### BACKGROUND

The development of virtual reality (VR) and live video streaming technologies has changed the ways of people to live and learn. For example, telemedicine is gradually transitioning from imagination to reality: a captured panoramic video of a ward is transmitted to a remote doctor by a network, and the remote doctor checks situations in the ward in real time from a computer or a VR display device.

For VR panoramic live video streaming, a resolution of 8K or even higher is necessary to provide users with better experience. This poses significant challenges to real-time processing and transmission capabilities of videos, as well as user traffic charges.

### SUMMARY

In view of this, embodiments of the present disclosure propose a video transmission solution.

According to a first aspect of the present disclosure, provided is a video transmission method executed by a mobile edge computing node. The method includes: receiving a panoramic video stream collected in real time. The method further includes: receiving pose information of a terminal device. The method further includes: generating a video stream for the terminal device based on the pose information and the panoramic video stream, wherein the video stream includes a part of the panoramic video stream corresponding to the pose information. The method further includes: transmitting the video stream to the terminal device.

In this way, the panoramic video stream collected in real time does not need to be uploaded to a server, but is processed into a video stream with a smaller data volume at the mobile edge computing node, thereby reducing the number of times of forwarding the video stream, and simplifying a routing process. Therefore, the embodiments of the present disclosure shorten an end-to-end delay during panoramic live video streaming and reduce a downlink data volume of the terminal device, thereby improving the viewing experience of a user

In some embodiments of the first aspect, receiving the panoramic video stream collected in real time may include: receiving the panoramic video stream from a routing device via a wide area network connection, wherein the panoramic video stream is transmitted from a shooting device to the routing device via a local area network connection. In this way, the panoramic video stream collected on a live streaming site can be uploaded to the mobile edge computing node in a faster manner, thereby ensuring the fluency of high-definition live video streaming.

In some embodiments of the first aspect, the local area network connection includes a wired local area network connection or a wireless local area network connection, and the wide area network connection includes a 5G network connection. In this way, a network transmission resource with better performance is provided to upload the panoramic video stream, thereby ensuring the fluency of high-definition live video streaming.

In some embodiments of the first aspect, generating the video stream for the terminal device based on the pose information and the panoramic video stream may include: determining a further mobile edge computing node associated with the terminal device; and transmitting the panoramic video stream to the further mobile edge computing node via a core network, so that the further mobile edge computing node, replacing the mobile edge computing node, generates the video stream for the terminal device and to transmit the video stream to the terminal device. In this way, load balancing among a plurality of mobile edge computing nodes can be implemented, and video processing and transmission traffic pressures are prevented from being concentrated at the mobile edge computing node in the vicinity of the live streaming site.

In some embodiments of the first aspect, determining the mobile edge computing node associated with the terminal device may include: determining a mobile edge computing node in the vicinity of the terminal device as the further mobile edge computing node. In a case where the terminal device uses cellular communication, since the terminal device has a relatively delay with a nearby edge node, the end-to-end delay can be shortened in this way.

In some embodiments of the first aspect, determining the further mobile edge computing node associated with the terminal device may include: in response to determining that available computing resources of the mobile edge computing node are insufficient, determining the further mobile edge computing node from a plurality of mobile edge computing nodes based on the available computing resources of the plurality of mobile edge computing nodes and delays between the terminal device and the plurality of mobile edge computing nodes. In this way, load balancing between the mobile edge computing nodes can be realized, it is ensured that the panoramic video stream can be processed in real time, and meanwhile, the delay with the terminal device is also taken into consideration, so that the system performance is optimized.

In some embodiments of the first aspect, generating the video stream for the terminal device based on the pose information and the panoramic video stream may include: determining a viewport area for the terminal device in the panoramic video stream based on the pose information; determining an extended area surrounding the viewport area in the panoramic video stream; and generating the video stream based on the viewport area, the extended area and the panoramic video stream. In some embodiments, the terminal device may be, for example, a head-mounted VR device, and when the user rotates the head, the pose of the VR device is changed, and the field of view thereof is changed accordingly. In this way, it is possible to transmit only part of video content in the field of view of the user to the terminal device without transmitting complete video content, which can reduce a required uplink transmission bandwidth. Moreover, by transmitting a boundary part greater than the range of the field of view, when the user of the terminal device is moving (e.g., rotating the head), a captured boundary part picture may be presented without requesting the video content by the network. In this way, the delay feeling of a picture change can be reduced, and the user experience is thus improved.

In some embodiments of the first aspect, determining the extended area surrounding the viewport area in the panoramic video stream may include: acquiring a motion-to-response delay of the terminal device; and determining the extended area based on the motion-to-response delay and the viewport area. In this way, the size of the extended area can be flexibly set based on a dynamic network condition. For example, when the delay is relatively low and the network condition is relatively good, the extended area may be set to be smaller; and when the delay is relatively large and the network condition is poor, the extended area may be set to be greater.

In some embodiments of the first aspect, the method may further include: receiving data of at least one detection instrument; and transmitting the data to the terminal device together with the video stream, wherein the data is aligned with the video stream based on a timestamp. In this way, the detection instrument (for a telemedicine scenario, for example, a stethoscope, an electrocardiogram device, and various image devices) may be provided on the live streaming site, and a detection signal is converted into an electrical signal to be transmitted to a remote doctor together with the panoramic video stream. Thus, a real hospital environment can be maximally created, and the remote doctor is assisted in immersive diagnosis/learning from multiple dimensions.

According to a second aspect of the present disclosure, provided is a video transmission apparatus executed by a mobile edge computing node. The apparatus includes a first receiving unit, a second receiving unit, a generation unit, and a transmission unit. The first receiving unit is configured to receive a panoramic video stream collected in real time. The second receiving unit is configured to receive pose information of a terminal device. The generation unit is configured to generate a video stream for the terminal device based on the pose information and the panoramic video stream, wherein the video stream includes a part of the panoramic video stream corresponding to the pose information. The transmission unit is configured to transmit the video stream to the terminal device.

Some embodiments of the second aspect may have units for implementing actions or functions described in the first aspect, and beneficial effects which the units may achieve are also similar to those in the first aspect. For the sake of brevity, no repeated description is given herein.

According to a third aspect of the present disclosure, provided is a video transmission system. The system includes: a shooting device; a routing device, in communication coupling with the shooting device; at least one mobile edge computing node, in communication coupling with the routing device; and at least one terminal device. The at least one mobile edge computing node is configured to: receive, from the routing device, a panoramic video stream collected by the shooting device in real time; receive pose information of the at least one terminal device; generate a video stream for the at least one terminal device based on the pose information and the panoramic video stream, wherein the video stream includes a part of the panoramic video stream corresponding to the pose information; and transmit the video stream to the at least one terminal device.

Some embodiments of the third aspect may have units for implementing actions or functions described in the first aspect, and beneficial effects which the units may achieve are also similar to those in the first aspect. For the sake of brevity, no repeated description is given herein.

According to a fourth aspect of the present disclosure, provided is a computing device, including at least one processing unit and at least one memory, wherein the at least one memory is coupled to the at least one processing unit and stores instructions for execution by the at least one processing unit, and the instructions, when executed by the at least one processing unit, cause the computing device to execute the method according to the first aspect of the present disclosure.

According to a fifth aspect of the present disclosure, provided is a computer-readable storage medium, including a machine-executable instruction, wherein the machine-executable instruction, when executed by a device, causes the device to execute the method according to the first aspect of the present disclosure.

According to a sixth aspect of the present disclosure, provided is a computer program product, including a machine-executable instruction, wherein the machine-executable instruction, when executed by a device, causes the device to execute the method according to the first aspect of the present disclosure.

This Summary is provided to introduce a selection of concepts in a simplified form that are further described below in the Detailed Description. This Summary is not intended to identify key features or essential features of the present disclosure, nor is it intended to limit the scope of the present disclosure.

### BRIEF DESCRIPTION OF THE DRAWINGS

The above and other objectives, features and advantages of the present disclosure will become more apparent from more detailed description of exemplary embodiments of the present disclosure with reference to the drawings, wherein the same reference signs generally represent the same components in the exemplary embodiments of the present disclosure.
FIG. 1 illustrates a schematic diagram of an example environment in which a plurality of embodiments of the present disclosure may be implemented;
FIG. 2 illustrates a schematic flowchart of a video transmission method according to an embodiment of the present disclosure;
FIG. 3 illustrates a schematic diagram of video transmission from a mobile edge computing node to a terminal device according to an embodiment of the present disclosure;
FIG. 4 illustrates a schematic flowchart of a process of generating a video stream for a terminal device according to an embodiment of the present disclosure;
FIG. 5 illustrates a schematic diagram of a picture of a video stream according to an embodiment of the present disclosure;
FIG. 6 illustrates a schematic block diagram of a video transmission apparatus according to an embodiment of the present disclosure; and
FIG. 7 illustrates a schematic block diagram of an example device capable of being used for implementing the embodiments of the present disclosure.

### DETAILED DESCRIPTION OF EMBODIMENTS

It can be understood that data (including, but not limited to, the data itself, the acquisition or usage of the data) involved in the present technical solution should follow the requirements of corresponding laws and regulations, as well as related regulations.

Preferred embodiments of the present disclosure will be described in more detail below with reference to the drawings. Although the preferred embodiments of the present disclosure are displayed in the drawings, it should be understood that the present disclosure may be implemented in various forms and should not be limited by the embodiments set forth herein. Rather, these embodiments are provided to enable the present disclosure to be understood more thoroughly and completely, and the scope of the present disclosure may be fully conveyed to those skilled in the art.

As used herein, the terms "include" and variations thereof are open-ended terms, i.e., "including, but not limited to". Unless otherwise stated, the term "or" means "and/or". The term "based on" means "based, at least in part, on". The terms "one exemplary embodiment" and "one embodiment" mean "at least one embodiment". The term "another embodiment" means "at least one additional embodiment". The terms "first", "second" and the like may refer to different or identical objects. Other explicit and implicit definitions may be included below.

It should be noted that numbers or values used herein are intended to facilitate the understanding of the technology of the present disclosure, and are not intended to limit the scope of the present disclosure.

In live streaming of a high-definition video (e.g., 8K or higher), panoramic video collection is performed by using a shooting device firstly, a plurality of cameras are usually used for photographing at the same time in the industry at present, and then multi-path videos are spliced into a panoramic video. Then, the panoramic video is coded to reduce a video storage volume and a transmission data volume, and the panoramic video is allocated to a terminal device of a user via a network. The terminal device (e.g., a smartphone or a head-mounted VR device) performs decoding, rendering and playing after receiving the panoramic video.

In a conventional solution, the coded panoramic video stream is directly transmitted to a server (e.g., via a 5G network), and then is sent to the terminal device from the server. This solution may ensure that a timely response is obtained when the head of the user is moving. When a frame rate is 30 fps, this means that a code rate of up to 60-100 Mbps needs to be met, it is difficult for an existing home WiFi or 4G network to meet such a high downlink bandwidth requirement, and a high code rate of the panoramic video stream also brings a relatively large pressure to bandwidth resources and user charges. In some other solutions, the server customizes a video stream for the terminal device, so as to reduce the data volume of downlink transmission. However, this brings a challenge to the video processing capability of the server: in the case that the number of users is relatively large, the server may not have enough computing resources to generate the customized video stream for the terminal device.

In view of this, an embodiment of the present disclosure provides a video transmission method executed by a mobile edge computing node. Compared with the conventional solutions, the processing and transmission of a live video stream are transferred from the server to a mobile edge node for execution. Specifically, the mobile edge computing node receives a panoramic video stream collected in real time and pose information of a terminal device, and generates a video stream for the terminal device based on the pose information and the panoramic video stream. The video stream for the terminal device includes a part of the panoramic video stream corresponding to the pose information. Then, the mobile edge computing node transmits the video stream to the terminal device.

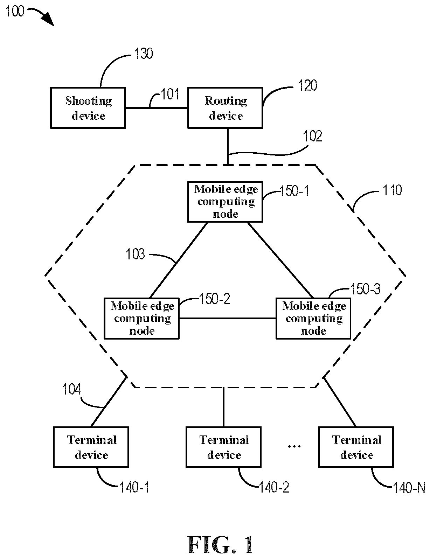

Implementation details of the embodiments of the present disclosure are described in detail below with reference to FIGS. 1-7.

FIG. 1 illustrates a schematic diagram of an example environment 100 in which a plurality of embodiments of the present disclosure may be implemented. The environment 100 includes a communication network 110, a routing device 120, a shooting device 130, and terminal devices 140-1, 140-2... 140-N (collectively referred to as 140).

The communication network 110 may be a 5G network and includes mobile edge computing (MEC) nodes 150-1, 150-2 and 150-3 (collectively referred to as 150), which are connected with each other via a core network 103. Herein, the mobile edge computing node is sometimes referred to as an edge node or an edge server. The mobile edge computing node 120 may be any device or cluster having a computing capability. The processing device 120 may include a graphics processing unit (GPU) to provide a capability of processing video content in real time, for example, coding and decoding, transcoding, and the like. The mobile edge computing node 150 is deployed in a machine room at the same location as a base station (not shown) of the communication network 110, and may be used for processing data (e.g., a video stream) of a device accessing the base station. It can be understood that the number of mobile edge computing nodes in the communication network 110 may be arbitrary, and is not limited to that shown in FIG. 1.

The shooting device 130 is located on a live streaming site, for example, a hospital ward or any other place, and is configured to capture a video of a surrounding environment. In some embodiments, the shooting device 130 may include one or more high-definition cameras (e.g., fisheye cameras). The shooting device 130 may splice multi-path videos captured by a plurality of high-definition cameras together and code the same to generate a panoramic video. Herein, the panoramic video may refer to a video of 360 degrees or a video less than 360 degrees (e.g., 180 degrees, 270 degrees, and the like), and the size of an angle of view of the panoramic video is not limited in the present disclosure.

The routing device 120 and the shooting device 130 may be placed together in terms of physical locations, and are both disposed on the live streaming site. The shooting device 130 transmits a captured video stream to the routing device 120 in real time via a local area network connection 101 (which may also be referred to as a local connection). The local area network connection 101 may be a wired local area network connection, for example, an Ethernet connection, a coaxial connection, a USB connection, a PCIe connection, or the like, and may also be a wireless local area network (WLAN) connection, for example, WiFi. In general, the local area network connection 101 provides a sufficient transmission bandwidth for the shooting device 130 to transmit the panoramic video stream to the routing device 120.

In a case where the wireless local area network connection is used, the routing device 120 may serve as a hotspot. For example, the routing device 120 may convert a 5G signal of a 5G phone card into a WiFi signal for use by the shooting device 130. The shooting device 130 and the routing device 120 may be configured to ensure good and stable signal strength (e.g., a relatively close distance and an aligned antenna angle are maintained) therebetween, so as to ensure the transmission performance therebetween.

The routing device 120 accesses the communication network 110 via a wide area network connection 102 (e.g., a 5G network private line) and uploads the panoramic video stream to the mobile edge computing node 150-1 adjacent thereto. Since an uplink peak rate of a 5G link is 300 Mbps to 400 Mbps, the routing device 120 may easily transmit a high-definition panoramic video stream (e.g., an 8K high-definition video) to the mobile edge computing node 150-1.

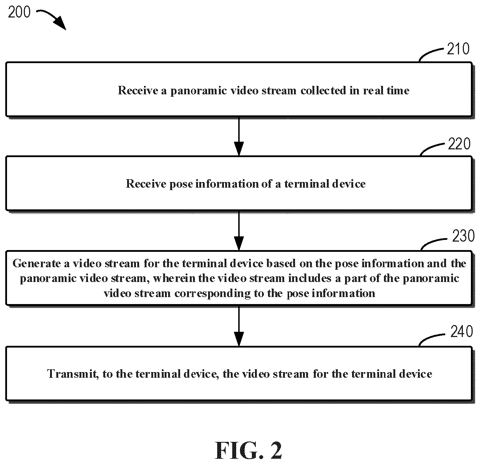

On the other side of the communication network 110, the terminal device 140 may be, for example, a smartphone, a personal computer, a tablet computer, a notebook computer, a wearable device (e.g., a head-mounted virtual reality (VR) display device, which is referred to as a VR head-mounted display for short), and the like. The terminal device 140 may include a display apparatus for displaying or projecting video content, a sensor for sensing a user pose (e.g., a head rotation angle), an input/output device, and the like. The terminal device 140 further includes a communication module that supports at least one remote communication capability, so as to access the communication network 110 in any wired or wireless manner. As shown in the figure, the terminal device 140 may access the communication network 110 via a wide area network connection 104. The wide area network connection 104 may include a cellular network connection (e.g., 3G, 4G or 5G network) or a wireless local area network connection (e.g., WiFi). The terminal device 140 may receive a live video stream for the device via the wide area network connection 104. In some embodiments, as described below with reference to FIG. 2 to FIG. 5, the video stream transmitted to the terminal device 140 may be a part obtained by cropping the panoramic video stream from the shooting device 130. Therefore, bandwidth requirements required for real-time transmission of the video stream to the terminal device 140 are reduced.

It should be understood that the environment 100 shown in FIG. 1 is merely one example in which the embodiments of the present disclosure may be implemented, and is not intended to limit the scope of the present disclosure. The embodiments of the present disclosure are also applicable to other systems or architectures. The environment 100 may include other components not shown, and the components shown in FIG. 1 may be connected and combined in different ways. For example, the routing device 120 and the shooting device 130 may be separate devices, or may be integrated into the same device.

An exemplary process of a video collection and transmission solution according to the embodiments of the present disclosure is further described below with reference to FIG. 2 to FIG. 5.

FIG. 2 illustrates a schematic flowchart of a video transmission method 200 according to an embodiment of the present disclosure. The process 200 may be implemented by the mobile edge node 150-1 in FIG. 1. The mobile edge computing node 150-1 is in the vicinity of the routing device 120. For ease of description, the process 200 will be described with reference to FIG. 1.

In block 210 of FIG. 2, the mobile edge node 150-1 receives a panoramic video stream collected in real time.

As mentioned above, the shooting device 130 collects a high-definition panoramic video (e.g., 8K or higher resolution) of a live streaming site. The shooting device 130 may splice videos captured by a plurality of fisheye cameras to obtain panoramic video content in an equirectangular projection format. The shooting device 130 may code the panoramic video content to obtain the panoramic video stream. The coding format may be any video coding/decoding format that has been present or will be developed in the future, for example, H.264, H.265 (High Efficiency Video Coding, HEVC), H.266 (Versatile Video Coding (VCC), etc. As an example, when the shooting device 130 performs real-time photography at a frame rate of, for example, 30 fps, the code rate of the coded panoramic video stream is about 60 Mbps to 100 Mbps, and the specific size of the code rate depends on the captured video content itself and a coding algorithm.

The shooting device 130 transmits the panoramic video stream to the routing device 120 via a local connection 101. As an example, the shooting device 130 packages the coded video stream by using an application layer transmission protocol, such as a real-time transport protocol (RTP), a real time messaging protocol (RTMP), and the like, and pushes the panoramic video stream to the routing device 120 in real time. Correspondingly, the routing device 120 uploads the panoramic video stream to the mobile edge computing node 150-1 in real time via the wide area network connection 102. In some embodiments, the wide area network connection 102 may be a 5G network private line that provides a peak rate of up to 300 Mbps to 400 Mbps, so as to meet the real-time transmission requirements of high-definition videos with resolutions of 8K or more.

Next, in block 220, the mobile edge computing node 150-1 receives pose information of the terminal device 140. Here, each terminal device 140 may provide its own pose information for the mobile edge computing node 150-1, and receive a video stream corresponding to the pose information as a response. The terminal device 140 may be a head-mounted VR display device, and the pose information may include an orientation of the device. The orientation may reflect an angle of the user viewing a video, such as a pitch angle and a yaw angle, wherein the range of the pitch angle may be [-90, 90] degrees, and the range of the yaw angle may be [-180, 180] degrees, thereby covering the panoramic video content. The pitch angle and the yaw angle may be measured by a sensor (e.g., a gravity sensor, an inertial sensor, a gyroscope, and the like) installed on the terminal device 140. In some embodiments, the pose information may further include a scale (or zoom in/out) ratio, which represents a near-far degree of a lens when the user views a video on the terminal device 140. The scale ratio may indicate the size of a picture when the user views the video, and the user may set or change the scale ratio by operating the terminal device 140. As an example, when the scale ratio is a value 1, the user views an original picture range, and when the scale ratio is 0.5, the user views a half range of the original picture (that is, the user zooms in the picture to amplify the picture for viewing), and when the scale ratio is 2, the user views a double range of the original picture (that is, the user is far away from the picture to zoom out the picture for viewing).

In a block 230, the mobile edge computing node 150-1 generates a video stream for the terminal device based on the pose information and the panoramic video stream. The generated video stream includes a part of the panoramic video stream corresponding to the pose information. In a case where the panoramic video stream is converted into a rectangular picture by equirectangular projection, a part of area in the rectangular picture may be determined as content to be sent to the terminal device 140 according to the pose information. The part of area may also be referred to as a viewport area of the terminal device 140, which represents a field of view of the user for viewing the video on the terminal device 140.

In some embodiments, the mobile edge computing node 150-1 may transcode the panoramic video stream by using a high-performance processor (e.g., a graphics processing unit GPU) to generate the video stream for the terminal device. For example, the mobile edge computing node 150-1 may perform a cropping operation on a picture of the panoramic video stream, and re-code a cropped picture as a picture of the video stream of the terminal device 140, so as to generate the video stream.

In block 240, the mobile edge computing node 150-1 transmits, to the terminal device 140, the video stream for the terminal device. As mentioned above, the terminal device 140 may access the communication network 110 by using a public network. The mobile edge computing node 150-1 may transmit the video stream via the wide area network communication connection 104. Depending on the access mode of the terminal device 140, the wide area network connection 104 may include a cellular network connection of 3G, 4G and 5G, or may include a wireless local area network, a wired network, etc.

In the process 200 described above, the video stream for the terminal device 140 is generated by the mobile edge computing node 150-1 in the vicinity of the routing device 120. In some embodiments, the video stream for the terminal device 140 may also be generated by another mobile edge node different from the mobile edge computing node 150-1. In some cases, load balancing among a plurality of mobile edge computing nodes in the communication network may be implemented in this way, so that video processing and transmission traffic pressures are prevented from being concentrated at the mobile edge computing node in the vicinity of the live streaming site, and the overall performance of live video transmission is improved.

In some embodiments, in a case where the terminal device 140 uses a cellular network for access, the mobile edge node in the vicinity of the terminal device 140 may be determined as an edge node for generating the video stream of the device. For example, assuming that the terminal device 140-1 is in the vicinity of the mobile edge computing node 150-2, then the mobile edge computing node 150-1 may transmit the panoramic video stream to the mobile edge computing device 150-2 via the core network 103. Here, a connection between the two nodes may be a 5G private line having sufficient bandwidth resources. Then, the mobile edge computing node 150-1 may notify the terminal device 140 to subsequently transmit the pose information to the mobile edge computing node 150-2 for generating a video stream for the terminal device 140-1.

In some embodiments, in a where the mobile edge computing node 150-1 determines that available computing resources thereof are insufficient, the mobile edge computing node 150-1 does not process the panoramic video stream, and selects an appropriate node from further mobile edge computing nodes in the communication network 110. For example, the mobile edge node 150-1 may acquire the number of currently available processing units (e.g., processing cores in the graphics processing unit), compare the number of currently available processing units with the number of processing units required for processing the panoramic video stream, and if the number of available processing units is less than the number of required processing units, determine that itself does not have sufficient computing resources. In this case, the mobile edge computing node 150-1 may select, based on the available computing resources of the plurality of mobile edge computing nodes in the communication network 110 and delays (e.g., times required from sending the pose information to receiving the corresponding video stream) between the terminal device 140 and the plurality of mobile edge computing nodes, one mobile edge computing node from the plurality of mobile edge computing nodes to process the panoramic video stream. A policy of selecting the mobile edge computing node may include the following conditions: the computing resources of the mobile edge computing node may satisfy the processing of the panoramic video stream, and the delay with the terminal device cannot exceed a preset threshold. In this way, load balancing between the mobile edge computing nodes is also achieved, it is ensured that the panoramic video stream can be processed in real time, and meanwhile, the delay with the terminal device is also taken into consideration, so that the system performance is optimized.

The video transmission process 200 according to the embodiments of the present disclosure is described above with reference to FIG. 2. Compared with existing solutions, in the embodiments of the present disclosure, the panoramic video stream collected in real time does not need to be uploaded to a live streaming server, but is processed into the video stream with a smaller data volume for the terminal device in the mobile edge computing node, thereby reducing the number of times of forwarding the panoramic video stream in the network, and simplifying the routing process. Therefore, the embodiments of the present disclosure shorten an end-to-end delay during panoramic live video streaming and reduces the downlink data volume of the terminal device, thereby improving the viewing experience of the user.

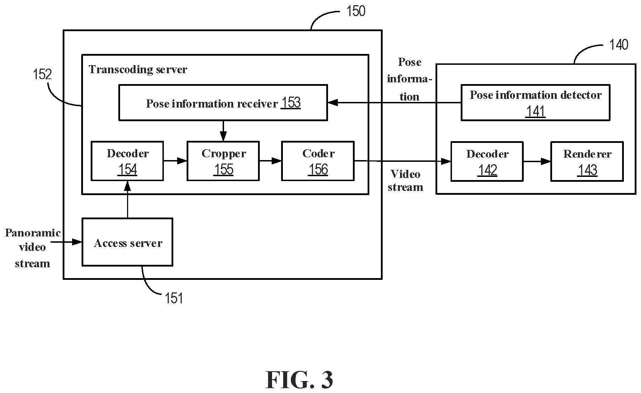

More details of the embodiments of the present disclosure are described below with reference to FIGS. 3-5. FIG. 3 illustrates a schematic diagram of video transmission from the mobile edge computing node 150 to the terminal device 140 according to an embodiment of the present disclosure.

The mobile edge computing node 150 includes an access server 151 and a transcoding server 152. The access server 151 and the transcoding server 152 may be implemented as application programs or virtual machines running on the mobile edge computing node 150. The access server 151 may be, for example, an Nginx server, which is configured to acquire the panoramic video stream transmitted by the shooting device 130 in real time. The panoramic video stream may be directly received from the routing device 120, or may be forwarded from a further mobile edge computing node.

The access server 151 pushes the collected panoramic video stream to the transcoding server 152, for example, pushes the stream by using ffmepg. The transcoding server 152 is configured to generate the video stream for the terminal device 140 according to the pose information of the terminal device 140 and the panoramic video stream, and transmit the generated video stream to the terminal device 140. The access server 151 may support to set parameters of the panoramic video stream, such as a cache time and an image group (GOP) length, thereby implementing customized viewing quality experience. Here, the cache time affects a delay of the user viewing the picture, and if a live streaming picture requires automatic auditing, a corresponding delay may be set. If no auditing is required, the cache time may be shortened as much as possible to ensure a low delay.

As shown in the figure, the terminal device 140 includes a pose information detector 141. The pose information detector 141 may include, for example, a gravity sensor, an inertial sensor, a gyroscope, or the like, and is configured to sense the orientation of the terminal device 140 in real time, and the orientation may be represented by the pitch angle and the yaw angle. The sensed device orientation may be used for determining an angle-of-view range of the user. As an example, upper and lower 30 degrees of the pitch angle of the device may be determined as a vertical angle of view of the user, that is, the vertical angle of view of the user is 60 degrees, and left and right 60 degrees of the yaw angle of the device are determined as a lateral angle of view of the user, that is, the lateral angle of view of the user is 120 degrees. In addition, the pose information detector may further acquire the scale ratio of the video which the user is viewing at present. The scale ratio represents the degree of zooming in or zooming out the lens when the user views the video. It can be understood that when the lens is zoomed in, the range of the picture that the user may see becomes smaller, and when the lens is zoomed out, the range of the picture that the user may see becomes greater. By using the wide area network connection 104 (e.g., a public network) mentioned above, the terminal device 140 may send the detected device orientation and/or scale ratio to a pose information receiver 153 of the transcoding server 152 in real time as pose information.

At the same time, at the mobile edge computing node 150, the access server 151 further pushes the panoramic video stream to the transcoding server 152. The transcoding server 152 generates the video stream for the terminal device 140 according to the received pose information and the panoramic video stream.

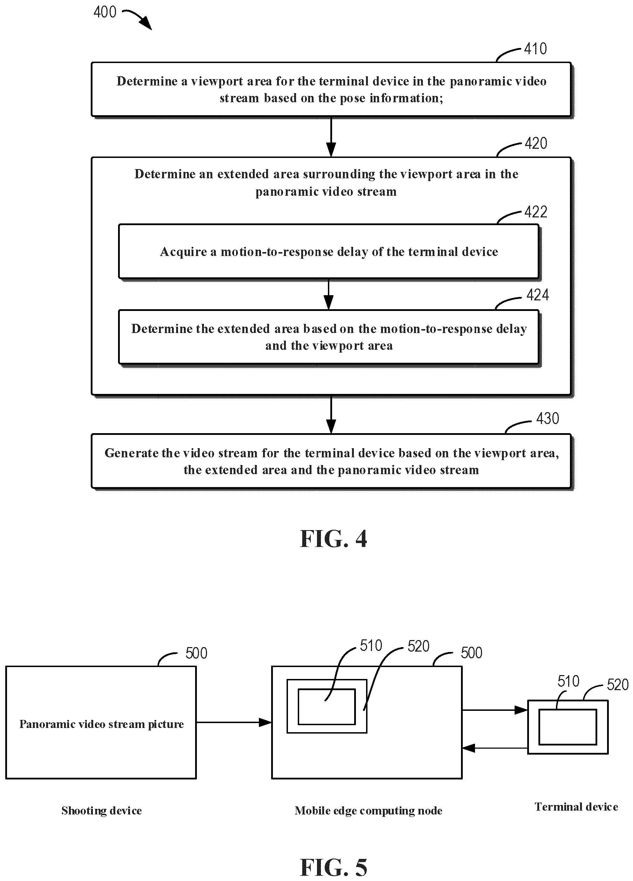

With reference to FIG. 4, it illustrates a schematic flowchart of a process 400 of generating the video stream for the terminal device according to an embodiment of the present disclosure. The process 400 may be implemented as an example implementation of block 230 in FIG. 2. The process 400 may be implemented by the mobile edge computing node 150. For ease of description, the process 400 will be described with reference to FIG. 3.

In block 410, the mobile edge computing node 150 determines a viewport area for the terminal device 140 in the panoramic video stream based on the pose information of the terminal device 140. FIG. 5 illustrates a schematic diagram of a picture of a video stream according to an embodiment of the present disclosure, wherein an area 500 represents a complete picture of the panoramic video stream, and an area 510 is the determined viewport area.

A decoder 154 decodes the received panoramic video stream to obtain a picture sequence. The picture of the panoramic video stream may be in an equirectangular projection format and in a rectangular shape having a pixel height (H) and a pixel width (W). As an example, the pose information may include the orientation (the pitch angle and the yaw angle) and/or the scale ratio of the terminal device 140. A cropper 155 in the transcoding server 152 may determine, based on the device orientation and/or the scale ratio, a partial area of the terminal device 140 in the rectangular picture as the viewport area. The picture in the viewport area falls within the field of view of the user, and thus needs to be transmitted and displayed on the terminal device 140. The range of the viewport area 510 may be represented by coordinates of boundary pixels.

In block 420, the mobile edge computing node 150 determines an extended area surrounding the viewport area in the panoramic video stream. The mobile edge computing node 150 may determine, as the extended area, several pixels outside left and right boundaries and several pixels outside upper and lower boundaries of the viewport area in the picture of the panoramic video stream. As shown in FIG. 5, an area 520 is the determined extended area.

Although the extended area 520 is not within the field of view of the user, it is beneficial to transmitting the image therein to the terminal device 140-1. This is because the high-definition panoramic video has very high delay requirements. First, when the head of the user moves, it is necessary to maintain a corresponding picture change within about 30 ms for presentation, otherwise, the user will feel an obvious delay feeling, or even vertigo. However, even if the network condition is relatively good, a network delay between the shooting device and the user often exceeds 100 ms, and the coding and decoding of the video also brings more delay. By using the extended area 520, when the head of the user moves to change the viewport area 510 of the terminal device 140-1, the terminal device 140 presents the picture of the captured extended area without requesting video content via the network. In this way, the delay feeling of the picture change can be reduced.

In some embodiments, the size of the extended area 520 may be determined according to the network condition. Specifically, in block 422, the mobile edge computing node 122 acquires a motion-to-response delay of the terminal device 140. The motion-to-response delay of the terminal device 140 may be detected by the transmission of the pose information. For example, the terminal device 140 may carry an index in the pose information sent to the mobile edge computing node 150, and the mobile edge computing node 150 may carry the index in the video stream for the pose information. Thus, the terminal device 140 may detect a delay experienced by the user from moving the head to receiving a response video stream. The delay may be periodically transmitted to the mobile edge computing node 150, for example, every 5 seconds, 10 seconds, 30 seconds or the like, or any other values.

In block 424, the mobile edge computing node 150 determines the extended area 520 based on the motion-to-response delay and the viewport area 510. In some embodiments, the mobile edge computing node 150 may determine a pixel width for outward extension from the viewport area 510 based on the motion-to-response delay. As an example, when the delay is relatively low and the network condition is relatively good, the pixel width for outward extension may be smaller and the extended area is smaller; and when the delay is relatively large and the network condition is poor, the pixel width for outward extension may be greater, and the extended area is greater. In this way, the size of the extended area is flexibly set.

In block 430, the mobile edge computing node 150 generates the video stream for the terminal device 140 based on the viewport area, the extended area and the panoramic video stream. Specifically, the cropper 155 crops a picture to be sent to the terminal device 140 from the picture of the panoramic video stream according to the range of the viewport area and the extended area. With the real-time transmission of the panoramic video stream and the pose information, the cropper 155 generates a picture sequence in real time. Then, a coder 126 performs coding and packaging based on the picture sequence to generate the video stream for the terminal device. The picture of the video stream for the terminal device is reduced (e.g., reduced to 1080 p or less) than the range of the picture of the panoramic video stream, thereby reducing the code rate of the video stream. For example, compared with the code rate of 60 Mbps to 100 Mbps of the 8K-resolution panoramic video, the code rate of the video stream obtained by transcoding is about 2 Mbps to 8 Mbps. Therefore, the video stream for the terminal device may be transmitted on a network with a relatively low bandwidth.

With continued reference to FIG. 3, a decoder 142 of the terminal device 140 decodes the received video stream and then transmits the decoded video to a renderer 143. The renderer 143 presents the video stream to the user, for example, projects the picture in front of the user or displays the picture on a screen.

In this way, the computing resources configured by the mobile edge computing node 150 support multi-user simultaneous transcoding, the transcoding server 152 receives the pose information fed back by different users in real time, and then respectively allocates a computing resource to each user to obtain a corresponding video stream, thereby ensuring that each user can freely view high-definition video streams.

In some embodiments, in addition to processing the panoramic video, real-time voice communication may also be supported for real-time communication between the user of the terminal device and a person on a video collection side. In addition, a detection instrument may also be arranged on the live streaming site, and the data of the detection instrument is transmitted to the terminal device 140. The data of the detection instrument may have a timestamp, and is aligned with the panoramic video stream and the video stream transmitted to the terminal device. As an example, in telemedicine, signals of medical instruments such as a stethoscope and an electrocardiogram may be provided, and the signals of the medical instruments are converted into electrical signals, and the electrical signals are transmitted to the routing device together with the panoramic video, so as to be transmitted to the terminal device 140. therefore, a real hospital environment can be created to the maximum extent, and the remote doctor is assisted in immersive diagnosis/learning from multiple dimensions.

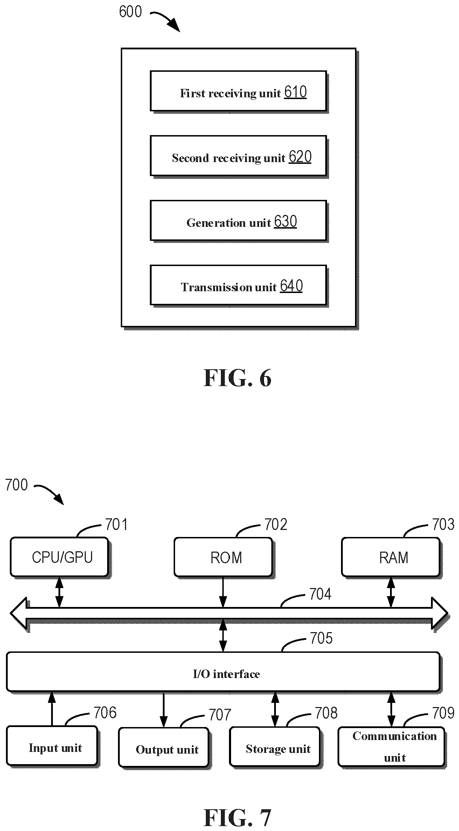

FIG. 6 illustrates a schematic block diagram of a video transmission apparatus 600 according to an embodiment of the present disclosure. The apparatus 600 may be arranged at the mobile edge computing node 150.

As shown in the figure, the apparatus 600 includes a first receiving unit 610, a second receiving unit 620, a generation unit 630, and a transmission unit 640. The first receiving unit 610 is configured to receive a panoramic video stream collected in real time. The second receiving unit 620 is configured to receive pose information of a terminal device. The generation unit 630 is configured to generate a video stream for the terminal device based on the pose information and the panoramic video stream, wherein the video stream includes a part of the panoramic video stream corresponding to the pose information. The transmission unit 640 is configured to transmit the video stream to the terminal device.

In some embodiments, the first receiving unit 610 may be configured to receive the panoramic video stream from a routing device via a wide area network connection, and the panoramic video stream is transmitted from a shooting device to the routing device via a local area network connection. In some embodiments, the local area network connection includes a wired local area network connection or a wireless local area network connection, and the wide area network connection includes a 5G network connection.

In some embodiments, the apparatus may further include a load balancing unit, configured to determine a further mobile edge computing node associated with the terminal device, and transmit the panoramic video stream to the further mobile edge computing node via a core network, so that the further mobile edge computing node, replacing the mobile edge computing node, generates the video stream for the terminal device and to transmit the video stream to the terminal device.

In some embodiments, the load balancing unit may be further configured to determine a mobile edge computing node in the vicinity of the terminal device as the further mobile edge computing node.

In some embodiments, the load balancing unit may be further configured to: in response to determining that available computing resources of the mobile edge computing node are insufficient, determine the further mobile edge computing node from a plurality of mobile edge computing nodes based on the available computing resources of the plurality of mobile edge computing nodes and delays between the terminal device and the plurality of mobile edge computing nodes.

In some embodiments, the generation unit 630 may be further configured to determine a viewport area for the terminal device in the panoramic video stream based on the pose information, determine an extended area surrounding the viewport area in the panoramic video stream, and generate the video stream based on the viewport area, the extended area and the panoramic video stream.

In some embodiments, the generation unit 630 may be further configured to acquire a motion-to-response delay of the terminal device, and determine the extended area based on the motion-to-response delay and the viewport area.

In some embodiments, the apparatus 600 may further include an interaction unit, configured to receive data of at least one detection instrument and transmit the data to the terminal device together with the video stream, wherein the data is aligned with the video stream based on a timestamp.

FIG. 7 illustrates a schematic block diagram of an example device 700 capable of being used for implementing embodiments of the present disclosure. For example, the mobile edge computing unit 150 according to the embodiments of the present disclosure may be implemented by the device 700. As shown in the figure, the device 700 includes a central processing unit (CPU) and a graphics processing unit (GPU), and may execute various suitable actions and processes in accordance with a computer program instruction stored in a read-only memory (ROM) 702 or a computer program instruction loaded from a storage unit 708 into a random access memory (RAM) 703. In the RAM 703, various programs and data needed by the operations of the device 700 are also stored. The CPU/GPU 701, the ROM 702 and the RAM 703 are connected with each other via a bus 704. An input/output (I/O) interface 705 is also connected to the bus 704.

A plurality of components in the device 700 are connected to the I/O interface 705, including: an input unit 706, for example, a keyboard, a mouse, and the like; an output unit 507, for example, various types of displays, a loudspeaker, and the like; a storage unit 708, for example, a magnetic tape, an optical disk, and the like; and a communication unit 709, for example, a network card, a modem, a wireless communication transceiver, and the like. The communication unit 709 may allow the device 700 to exchange information/data with other devices via a computer network, such as the Internet and/or various telecommunication networks. The communication unit 709 may include various types of local area network communication modules and wide area network communication modules.

The various processes and processing described above, such as the process 200 and/or 400 may be executed by the CPU/GPU 701. For example, in some embodiments, the method process 200 and/or 400 may be implemented as a computer software program, which is tangibly included in a machine-readable medium, such as the storage unit 708. In some embodiments, some or all computer programs may be loaded into and/or installed on the device 700 via the ROM 702 and/or the communication unit 709. When the computer program is loaded into the RAM 703 and executed by the CPU/GPU 701, one or more actions of the process 200 and/or 400 described above may be executed.

The present disclosure may be a method, an apparatus, a system, and/or a computer program product. The computer program product may include a computer-readable storage medium carrying computer-readable program instructions thereon for executing various aspects of the present disclosure.

The computer-readable storage medium may be a tangible device that may maintain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination of the foregoing devices. More specific examples (a non-exhaustive list) of the computer-readable storage medium include: a portable computer disk, a hard disk, a random access memory (RAM), a read-only memory (ROM), an erasable programmable read-only memory (EPROM or a flash memory), a static random access memory (SRAM), a compact disc read-only memory (CD-ROM), a digital video disc (DVD), a memory stick, a floppy disk, a mechanical coding device, such as a punched card storing instructions thereon or a protrusion structure in a groove, and any suitable combination thereof. The computer-readable storage medium used herein is not construed as a transitory signal per se, such as radio waves or other freely propagating electromagnetic waves, electromagnetic waves propagating by a waveguide or other transmission media (e.g., optical pulses passing through a fiber-optic cable), or electrical signals transmitted by a wire.

The computer-readable program instructions described herein may be downloaded to respective computing/processing devices from the computer-readable storage medium or downloaded to an external computer or external storage device via a network, such as the Internet, a local area network, a wide area network, and/or a wireless network. The network may include copper transmission cables, optical fiber transmission, wireless transmissions, routers, firewalls, switches, gateway computers and/or edge servers. A network adapter card or network interface in each computing/processing device receives the computer-readable program instructions from the network and forwards the computer-readable program instructions for storage in the computer-readable storage medium in each computing/processing device.

Computer program instructions for executing the operations of the present disclosure may be assembly instructions, instruction set architecture (ISA) instructions, machine instructions, machine-related instructions, micro-codes, firmware instructions, state setting data, or source codes or target codes written in any combination of one or more programming languages, including object-oriented programming languages, such as Smalltalk, C++, and the like, as well as conventional procedural programming languages, such as "C" language or similar programming languages. The computer-readable program instructions may be executed entirely on a user computer, executed partly on the user computer, executed as a stand-alone software package, executed partly on the user computer and partly on a remote computer, or executed entirely on the remote computer or a server. In the case involving the remote computer, the remote computer may be connected to the user computer through any type of network, including a local area network (LAN) or a wide area network (WAN), or it may be connected to an external computer (e.g., through the Internet using an Internet service provider). In some embodiments, an electronic circuit, such as a programmable logic circuit, a field programmable gate array (FPGA), or a programmable logic array (PLA), may be personally customized by using state information of the computer-readable program instructions, and the electronic circuit may execute the computer-readable program instructions to implement various aspects of the present disclosure.

Various aspects of the present disclosure are described herein with reference to flowcharts and/or block diagrams of the method, apparatus (system) and computer program product according to the embodiments of the present disclosure. It should be understood that each block of the flowcharts and/or block diagrams, and combinations of blocks in the flowcharts and/or block diagrams may be implemented by the computer-readable program instructions.

These computer-readable program instructions may be provided for a general-purpose computer, a special-purpose computer or processing units of other programmable data processing apparatuses, so as to generate a machine, such that these instructions, when executed by the computers or the processing units of the other programmable data processing apparatuses, generate apparatuses used for implementing specified functions/actions in one or more blocks of the flowcharts and/or the block diagrams. These computer-readable program instructions may also be stored in the computer-readable storage medium, these instructions cause the computers, the programmable data processing apparatuses and/or other devices to work in particular manners, such that the computer-readable storage medium storing the instructions includes a manufacture, which includes instructions for implementing the various aspects of the specified functions/actions in one or more blocks of the flowcharts and/or the block diagrams.

These computer-readable program instructions may also be loaded on the computers, the other programmable data processing apparatuses or the other devices, so as to execute a series of operation steps on the computers, the other programmable data processing apparatuses or the other devices to produce processes implemented by the computers, such that the instructions executed on the computers, the other programmable data processing apparatuses or the other devices implement the specified functions/actions in one or more blocks of the flowcharts and/or the block diagrams.

The flowcharts and the block diagrams in the drawings show system architectures, functions and operations of possible implementations of the system, the method and the computer program product according to a plurality of implementations of the present disclosure. In this regard, each block in the flowcharts and the block diagrams may represent a part of a module, a program segment or an instruction, and a part of the module, the program segment or the instruction contains one or more executable instructions for implementing specified logical functions. In some alternative implementations, the functions annotated in the blocks may also occur in a different order from that annotated in the drawings. For example, two consecutive blocks may actually be executed substantially in parallel, or they may sometimes be executed in a reverse order, depending on the functions involved. It should also be noted that, each block in the block diagrams and/or the flowcharts, and the combination of the blocks in the block diagrams and/or the flowcharts may be implemented by a dedicated hardware-based system that is used for executing the specified functions or actions, or may be implemented by a combination of dedicated hardware and computer instructions.

Various implementations of the present disclosure have been described above, and the above description is exemplary, not exhaustive, and is not limited to the various disclosed implementations. Without departing from the scope and spirit of the various described implementations, many modifications and changes are apparent to those ordinary skilled in the art. The choice of the terms used herein is intended to best explain the principles of various implementations, practical applications, or improvements to the technology in the market, or to enable other ordinary skilled in the art to understand the various implementations disclosed herein.

## Claims

1. A video transmission method executed by a mobile edge computing node, comprising:
receiving a panoramic video stream collected in real time;
receiving pose information of a terminal device;
generating a video stream for the terminal device based on the pose information and the panoramic video stream, wherein the video stream comprises a part of the panoramic video stream corresponding to the pose information; and
transmitting, to the terminal device, the video stream for the terminal device.

2. The method according to claim 1, wherein receiving the panoramic video stream collected in real time comprises:
receiving the panoramic video stream from a routing device via a wide area network connection, wherein the panoramic video stream is transmitted from a shooting device to the routing device via a local area network connection.

3. The method according to claim 2, wherein the local area network connection comprises a wired local area network connection or a wireless local area network connection, and the wide area network connection comprises a 5G network connection.

4. The method according to claim 1, wherein generating the video stream for the terminal device based on the pose information and the panoramic video stream comprises:
determining a further mobile edge computing node associated with the terminal device; and
transmitting the panoramic video stream to the further mobile edge computing node via a core network, so that the further mobile edge computing node, replacing the mobile edge computing node, generates the video stream for the terminal device and transmits the video stream to the terminal device.

5. The method according to claim 4, wherein determining the mobile edge computing node associated with the terminal device comprises:
determining a mobile edge computing node in the vicinity of the terminal device as the further mobile edge computing node.

6. The method according to claim 4, wherein determining the further mobile edge computing node associated with the terminal device comprises:
in response to determining that available computing resources of the mobile edge computing node are insufficient, determining the further mobile edge computing node from a plurality of mobile edge computing nodes based on available computing resources of the plurality of mobile edge computing nodes and delays between the terminal device and the plurality of mobile edge computing nodes.

7. The method according to claim 1, wherein generating the video stream for the terminal device based on the pose information and the panoramic video stream comprises:
determining a viewport area for the terminal device in the panoramic video stream based on the pose information;
determining an extended area surrounding the viewport area in the panoramic video stream; and
generating the VR video stream based on the viewport area, the extended area and the panoramic video stream.

8. The method according to claim 7, wherein determining the extended area surrounding the viewport area in the panoramic video stream comprises:
obtaining a motion-to-response delay of the terminal device; and
determining the extended area based on the motion-to-response delay and the viewport area.

9. The method according to claim 1, further comprising:
receiving data of at least one detection instrument; and
transmitting the data to the terminal device together with the video stream, wherein the data is aligned with the video stream based on a timestamp.

10. A video transmission apparatus executed by a mobile edge computing node, comprising:
a first receiving unit, configured to receive a panoramic video stream collected in real time;
a second receiving unit, configured to receive pose information of a terminal device;
a generation unit, configured to generate a video stream for the terminal device based on the pose information and the panoramic video stream, wherein the video stream comprises a part of the panoramic video stream corresponding to the pose information; and
a transmission unit, configured to transmit, to the terminal device, the video stream for the terminal device.

11. A video transmission system, comprising:
a shooting device;
a routing device, in communication coupling with the shooting device;
at least one mobile edge computing node, in communication coupling with the routing device; and
at least one terminal device,
wherein the at least one mobile edge computing node is configured to:
receive, from the routing device, a panoramic video stream collected by the shooting device in real time;
receive pose information of the at least one terminal device;
generate a video stream for the at least one terminal device based on the pose information and the panoramic video stream, wherein the video stream comprises a part of the panoramic video stream corresponding to the pose information; and
transmit, to the at least one terminal device, the video stream for the terminal device.

12. The system according to claim 11, further comprising:
at least one detection instrument, coupled with the routing device via a local area network connection and configured to transmit data to the at least one mobile edge computing node via the routing device, wherein,
the at least one terminal device is further configured to transmit the data to the terminal device together with the video stream, and the data is aligned with the video stream based on a timestamp.

13. A computing device, comprising:
at least one processing unit, and
at least one memory, wherein the at least one memory is coupled to the at least one processing unit and stores instructions for execution by the at least one processing unit, and the instructions, when executed by the at least one processing unit, cause the computing device to perform the method according to any of claims 1-9.

14. A computer-readable storage medium, comprising machine-executable instructions, wherein the machine-executable instructions, when executed by a device, cause the device to perform the method according to any of claims 1-9.

15. A computer program product, comprising machine-executable instructions, wherein the machine-executable instructions, when executed by a device, cause the device to perform the method according to any of claims 1-9.
